Europäisches Patentamt

European Patent Office

Office européen des brevets

(11) Veröffentlichungsnummer: **0 446 659 A2**

# (12) EUROPÄISCHE PATENTANMELDUNG

(21) Anmeldenummer: **91102332.3**

(22) Anmeldetag: **19.02.91**

(51) Int. Cl.5: **B65G 47/51**, B65G 35/06, A22C 11/00

(30) Priorität: **12.03.90 DE 4007800**

(43) Veröffentlichungstag der Anmeldung:
**18.09.91 Patentblatt 91/38**

(84) Benannte Vertragsstaaten:
**CH DE DK ES FR GB IT LI NL SE**

(71) Anmelder: **HANDTMANN A-PUNKT AUTOMATION GMBH**
**Löwenstrasse 8**
**W-7982 Baienfurt(DE)**

(72) Erfinder: **Strasser, Karl-Heinz**
**Hauptstrasse 66**
**W-7981 Berg b. Ravensburg(DE)**
Erfinder: **Röck, Martin, Dipl.-Ing.**
**Höll 18**
**W-7992 Tettnang(DE)**

(74) Vertreter: **Engelhardt, Guido, Dipl.-Ing.**
**Patentanwalt Montafonstrasse 35 Postfach 1350**
**W-7990 Friedrichshafen 1(DE)**

(54) **Transporteinrichtung.**

(57) Bei einer Einrichtung (1) zur gesteuerten Überführung von Transportbehältern (21) von einer Beladestation (2) zu einer Entladestation (3) ist dazu ein vorzugsweise horizontal angeordnetes kontinuierlich umlaufendes Transportmittel (11) in Form eines Transportrades (22) vorgesehen, an dem die Transportbehälter (21) mit Hilfe eines Trägers (31) aufgehängt sind, der mit dem Transportmittel (11) wahlweise Koppel- und entkoppelbar ist.

Durch diese Ausgestaltung werden unterschiedliche Arbeitsgeschwindigkeiten der durch die Einrichtung (1) miteinander verketteten Maschinen ausgeglichen, so daß eine maschinelle und Kontinuierliche Arbeitsweise bei geringem Bedienungsaufwand gegeben ist. Die Einrichtung (1) wirkt hierbei als Speicher für eine nachgeschaltete Verpackungsmaschine, die somit ununterbrochen, und zwar auch bei Stillstandszeiten der vorgeschalteten Maschine arbeiten Kann.

FIG. 1

EP 0 446 659 A2

Die Erfindung bezieht sich auf eine Einrichtung zur gesteuerten Überführung von Transportbehältern von einer Beladestation zu einer Entladestation, insbesonder zum verpackungsgerechten Überführen von Frischwürsten zu einer Verpackungsmaschine.

Die in einer Wurstfüllmaschine portionierten und abgedrehten Würste werden bisher von Hand von dieser Maschine abgenommen und in Verpackungsbehältnissen einer nachgeschalteten Verpackungsmaschine eingelegt. Diese Verfahrensweise ist nicht nur sehr aufwendig und somit kostenintensiv, da für diese Arbeitsvorgänge bis zu fünf Personen benötigt werden, um die aus der Wurstfüllmaschine ausgestoßenen Würste in die Verpackdungsmaschine überzuführen, sondern auch unhygienisch. Jede Wurst ist nämlich in die Hand zu nehmen und mitunter auch längere Zeit in der Hand zu halten, damit während der Zeit eines Darmwechsels in der mit hoher Portioniergeschwindigkeit arbeitenden Wurstfüllmaschine die taktweise arbeitende Verpackungsmaschine bestückt werden kann. Das Überführen von Würsten von einer Wurstfüllmaschine zu einer Verpackungsmaschine ist daher nicht rationell und auch nicht zeitgemäß.

Aufgabe der Erfindung ist es daher, eine Transporteinrichtung zu schaffen, mit der es möglich ist, die in einer Wurtsfüllmaschine portionierten und abgedrehten Würste auf maschinelle Weise und ohne daß diese dabei von Menschen berührt werden müssen, in Verpackungsbehältnisse einer Verpackungsmaschine einzulegen. Der dazu erforderliche Bauaufwand soll gering gehalten werden, vor allem aber soll erreicht werden, daß die Betriebskosten durch Personalreduzierung in einem erheblichen Maße gegenüber der bisher praktizierten Verfahrensweise gesenkt werden können und daß die unterschiedlichen Arbeitsgeschwindigkeiten der beiden miteinander verketteten Maschinen ohne Schwierigkeiten auszugleichen sind, so daß sich die bei einem Darmwechsel unumgänglichen Stillstandszeiten der Wurstfüllmaschine nicht ungünstig auf die kontinuierlich arbeitende Verpackungsmaschine auswirken.

Gemäß der Erfindung ist die Einrichtung zur gesteuerten Überführung von Transportbehältern von einer Beladestation zu einer Entladestation gekennzeichnet durch ein vorzugsweise horizontal angeordnetes kontinuierlich umlaufendes Transportmittel in Form eines Transportrades, eines Transportbandes oder dgl., an dem die Transportbehälter mit Hilfe eines Trägers aufgehängt sind, der mit dem Transportmittel wahlweise koppel- und entkoppelbar ist.

Zweckmäßig ist es hierbei, den Träger der Transportbehälter jeweils aus zwei mit Abstand zueinander und vertikal übereinander angeordneten Schienen zu bilden, zwischen die das Transportmittel eingreift, und in der oberen Schiene des Trägers in Förderrichtung des Transportmittels an deren vorderen Ende einen Klemmkörper verschwenkbar zu lagern, mittels dem der Träger kraftschlüssig mit dem Transportmittel wahlweise verbindbar ist.

Der Klemmkörper kann in einfacher Ausgestaltung durch einen mittels eines Bolzens in einer Ausnehmung der oberen Schiene verschwenkbar gelagerten Winkelhebel gebildet sein, der an dem dem Transportmitttel zugekehrten Schenkel eine vorzugsweise ballig ausgebildete und gegenüber der Schwenkachse zurückgesetzten Klemmfläche aufweist. Des weiteren sollte dem Klemmkörper eine in Förderrichtung des Transportmittels wirkende Druckfeder zugeordnet sein.

Ferner ist es angebracht, die obere Schiene des Trägers an dem dem Klemmkörper gegenüberliegenden hinteren Ende mit einem vorzugsweise in Fluchtrichtung der auf den Klemmkörper einwirkenden Druckfeder angeordneten vorstehenden Nocken z. B. in Form eines Stift es zu versehen, mittels dem der Klemmkörper des benachbarten Transportbehälters beim Aufstauen zweier Transportbehälter durch Verschwenken von dem Transportmittel lösbar ist.

Auch sollte der Klemmkörper in dem mit der Klemmfläche versehenen Bereich in einer in das Transportmittel eingearbeitete Nut seitlich geführt und die dem Klemmkörper zugeordnete Anlagefläche des Transportmittels mit einem einen hohen Reibungskoeffizienten aufweisenden Belag versehen sein.

Die Belade- und/oder Entladestation sollte jeweils einen zustellbaren Anschlag, beispielsweise in Form eines mit einer vertikal gerichteten Anschlagfläche versehenen und vorzugsweise vertikal verschiebbaren Bolzens, aufweisen, durch den der Klemmkörper des Trägers von dem Transportmittel lösbar ist, wobei der Anschlag mit einer mit dem freien Schenkel des Klemmkörpers zusammenwirkende Auflaufschräge und die obere Schiene des Trägers mit einem mit der Anschlagfläche des zustellbaren Anschlages zusammenwirkenden Ansatz versehen sein sollte.

Vorteilhaft ist es des weiteren, die Öffnungs- und Schließbewegungen des vorzugsweise aus zwei gegeneinander verschwenkbar angeordneten Schalen bestehenden Transportbehälters in der Ladestation in Abhängigkeit von der Zuführung der von diesen aufzunehmenden Stückgütern, beispielsweise über ein Gestänge oder eine ansteuerbare Servoeinrichtung, und in der Entladestation in Abhängigkeit von dem Arbeitstakt der Verpackungsmaschine, beispielsweise durch eine Servoeinrichtung, zu steuern und die Lade- und/oder Entladestation der Einrichtung mit nach- und/oder vorgeschalteten an ein Steuergerät angeschlossenen Kontrollelementen zu versehen. Wird eine Transporteinrichtung gemäß der Erfindung ausgebildet, in dem Transportbehälter mit einem kontinuierlich umlaufenden Transportmittel wahlweise gekoppelt werden, so ist eine maschinelle und kontinuierliche Arbeitsweise bei geringem Bedienungsaufwand gegeben. Dabei werden die unterschiedlichen Arbeitsgeschwindigkeiten der aneinander angeschlossenen Maschinen ausgeglichen und die Würste werden schonend behandelt, Ausschuß wird somit weitgehend vermieden. Die Transporteinrichtung, vor deren Entladestation Transportbehälter aufgestaut werden können, wirkt somit als Speicher für eine Verpackungsmaschine, so daß diese kontinuierlich, und zwar auch bei durch Darmwechsel bedingte Stillstandszeiten der Wurstfüllmaschine arbeiten kann.

Des weiteren ist von Vorteil, daß die Transporteinrichtung eine hohe Leistung aufweist und auch auf unterschiedliche Produkte, da die Transportbehälter leicht auszutauschen sind, einstellbar ist, eine hohe Flexibilität sowie eine planbare Kapazität sind daher gegeben. Und da die Würste beim Überführen nicht von Menschen berührt werden und demnach keine manuelle Tätigkeiten notwendig sind, ist auch eine hygienische Handhabung gewährleistet. Durch die vorschlagsgemäße Einrichtung wird somit die Wurstproduktion von der Füllmaschine bis zur Verpackung mit geringem baulichem Aufwand automatisiert.

In der Zeichnung ist ein Ausführungsbeispiel der gemäß der Erfindung ausgebildeten Transporteinrichtung dargestellt, die nachfolgend im einzelnen erläutert ist. Hierbei zeigt:

Figur 1    die Transporteinrichtung in einer Seitenansicht,

Figur 2    die Transporteinrichtung nach Figur 1 in Draufsicht,

Figur 3    einen der der Lade- und Entladestation der Transporteinrichtung nach den Figuren 1 und 2 zugeordneten verstellbaren Anschlag und

Figur 4    einen der bei der Transporteinrichtung nach den Figuren 1 und 2 verwendeten Transportbehälter mit Träger in Draufsicht.

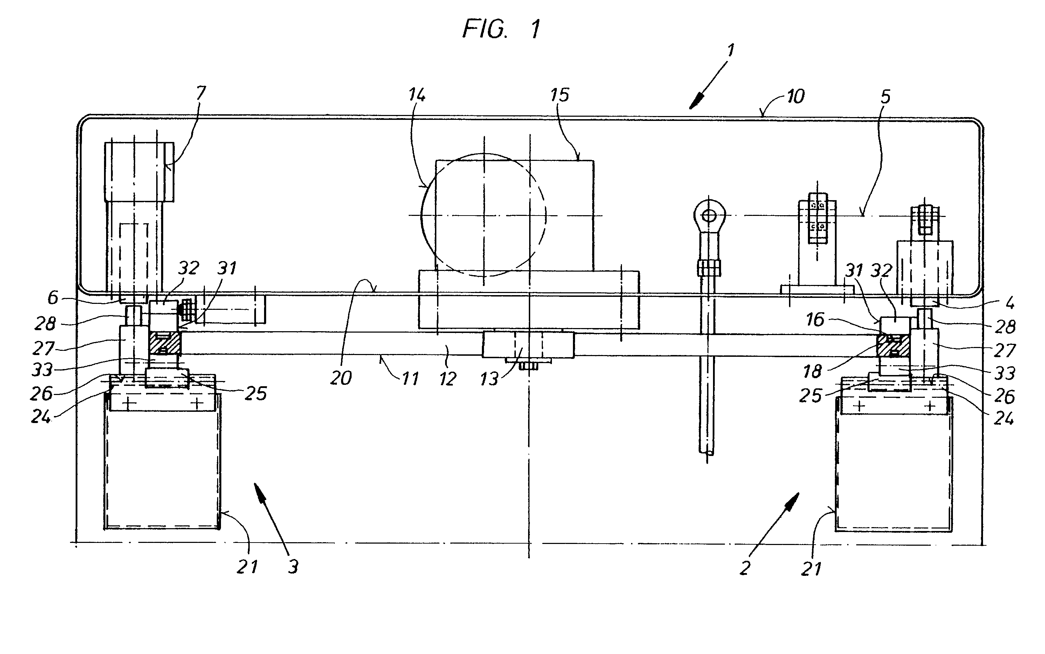

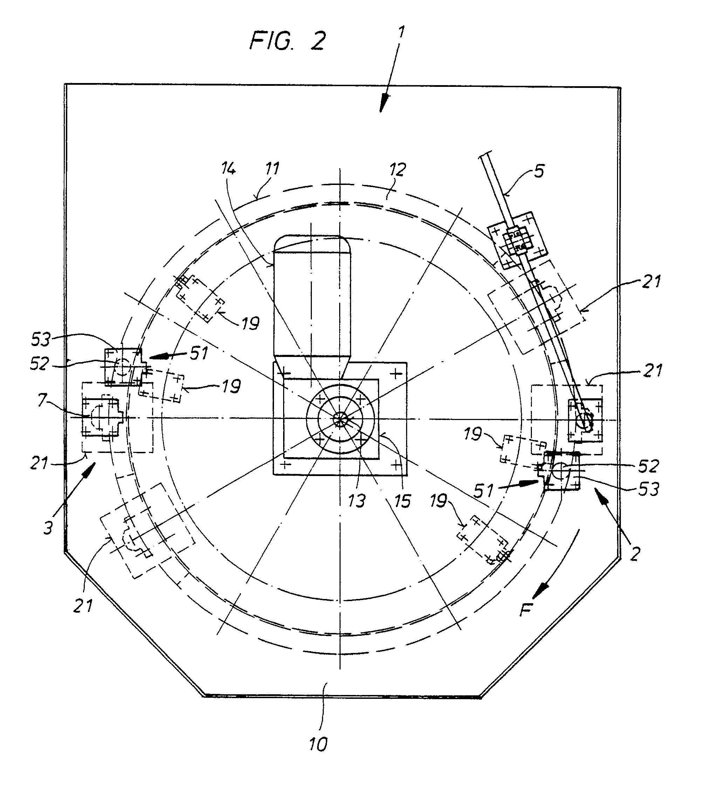

Die in den Figuren 1 und 2 dargestellte und mit 1 bezeichnete Einrichtung dient zur gesteuerten Überführung von Transportbehältern 21 von einer Beladestation 2 zu einer Entladestation 3, um in diesen beispielsweise in einer Wurstfüllmaschine portionierte und abgedrehte Frischwürste auf maschinelle Weise zu einer Verpackungsmaschine zu transportieren. Die Transportbehälter 21 werden hierbei in der Beladestation 2 entsprechend dem Produktionsanfall bestückt und in der Entladestation 3 im Takt der Verpackungsmaschine entleert, so daß durch die Einrichtung 1 unterschiedliche Arbeitsgeschwindigkeiten der durch diese miteinander verketteten Maschinen ausgeglichen werden.

Zum Transport der Transportbehälter 31 ist ein Transportmittel 11 in Form eines Transportrades 12 vorgesehen, dessen Welle 13 in einer Zwischenwand 20 eines Tragrahmens 10 drehbar gelagert ist. Über ein Getriebe 15 ist das Transportrad 12 mit einem Antriebsmotor 14 trieblich verbunden und wird von diesem kontinuierlich angetrieben.

Die Transportbehälter 21 bestehen jeweils aus zwei verschwenkbar gelagerten Schalen 22 und 23 und sind in der Ladestation 2, in der Beladestation 3 sowie beim Aufstauen mit dem Transportrad 12 koppelbar und entkoppelbar. Dies wird mittels verstellbarer Anschläge 51 sowie eines Klemmkörpers 35 bewerkstelligt, der in einem Träger 31, an dem die Schalen 22 und 23 der Transportbehälter 21 aufgehängt sind, angeordnet ist.

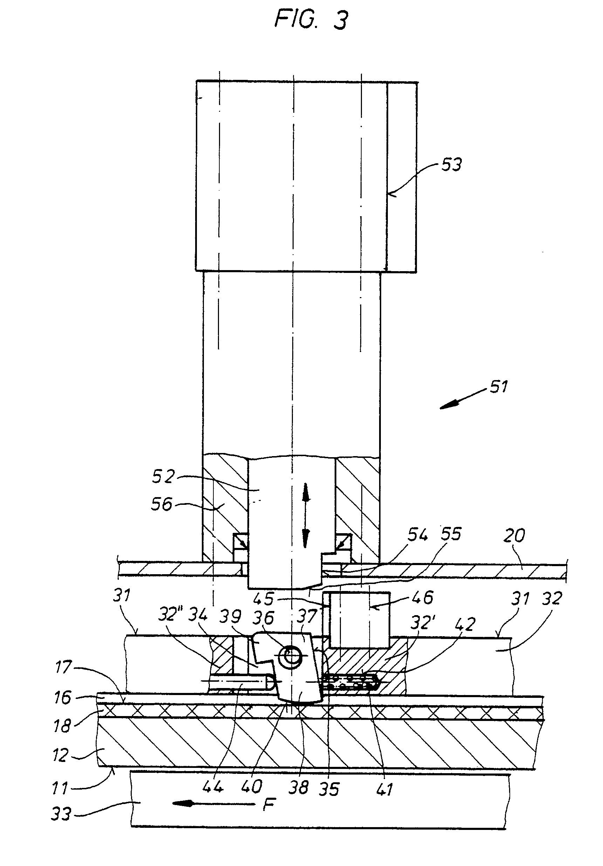

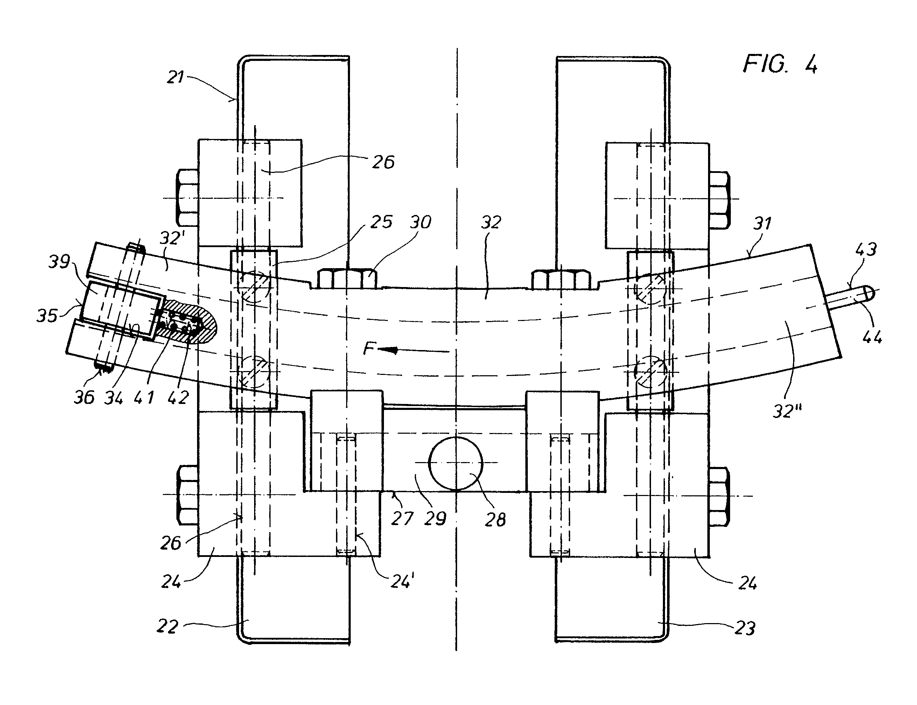

Der Träger 31 besteht, wie dies insbesondere den Figuren 3 und 4 zu entnehmen ist, aus zwei entsprechend dem Transportrad 12 gekrümmte vertikal übereinander und mit Abstand zueinander angeordnete Schienen 32 und 33, zwischen die das Transportrad 12 eingreift. An dem in Förderrichtung F vorderen Ende 32' der oberen Schiene 32 ist in einer Ausnehmung 34 der Klemmkörper 35 eingesetzt, der durch einen auf einem Bolzen 36 verschwenkbar gelagerten Winkelhebel 37 gebildet ist. Der nach unten gerichtete Schenkel 38 des Winkelhebels 37 ist mit einer ballig ausgebildeten und gegenüber dem Bolzen 36 zurückgesetzten Klemmfläche 40 ausgestattet, die mit einer Anlagefläche 17 des Transportrades 12 zusammenwirkt. Dazu ist in das Transportrad 12 eine umlaufende Nut 16 eingearbeitet und die Anlagefläche 17 ist mit einem Belag 18 beschichtet, der einen hohen Reibungskoeffizienten aufweist. Durch die Nut 16 ist somit der Schenkel 38 des Winkelhebels 37 auch seitlich geführt. Auf den Klemmkörper 35 wirkt eine in einer Bohrung 41 der Schiene 32 eingesetzte Druckfeder 42 ein, durch die der Schenkel 38 des Winkelhebels 37 gegen die Anlagefläche 17 des Transportrades 12 gedrückt wird.

An dem hinteren Ende 32'' der Schiene 32 ist ein vorstehender Nocken 43 angebracht, der durch einen Stift 44 gebildet ist. Der Stift 44 ist in Fluchtrichtung der Feder 42 angeordnet und wirkt beim Aufstauen zweier Transportbehälter 21, wie dies in Figur 3 dargestellt ist, auf den Klemmkörper 35 ein. Mit Hilfe des Stiftes 44 kann somit der Klemmkörper 35 entgegen der Kraft der Feder 42 verschwenkt und somit die kraftschlüssige Verbindung mit dem Transportrad 12 gelöst werden.

Der der Ladestation 2 und der Entladestation 3 zugeordnete verstellbare Anschlag 51 besteht, wie dies in Figur 3 dargestellt ist, aus einem in einem Gehäuse 56 verschiebbar gelagerten Bolzen 52, dem zur Verstellung eine Servoeinrichtung 53 zugeordnet ist. Der Bolzen 52 ist hierbei mit einer vertikal gerichteten Anschlagfläche 54 ausgestattet, und an der Schiene 32 ist mittels Schrauben 46 ein Ansatz 45 befestigt, der mit der Anschlagfläche 54 des Bolzens 52 zusammenwirkt. Außerdem ist an der Stirnfläche des Bolzens 54 eine Auflaufschräge 55 angearbeitet, die mit dem freien Schenkel 39 des Winkelhebels 37 in der Weise zusammenwirkt, daß die Triebverbindung durch Verschwenken des Klemmkörpers 35 zwischen diesem und dem Transportrad 12 bei einem vorgesehenen Halt in der Ladestation 2 bzw. der Entladestation 3 gelöst wird.

Die beiden Schalen 22 und 23 der Transportbehälter 21 sind jeweils an Hebeln 24 eingespannt, die mittels eines Gelenkbolzens 26 in an der unteren Schiene 33 des Trägers 31 befestigte Halteschienen 25 verschwenkbar gelagert sind. Des weiteren sind die Hebel 24 über Bolzen 24' mit einem Stellglied 27 in Form einer Querstrebe gelenkig verbunden, an dem ein nach oben abstehender Bolzen 28 angebracht ist. Der Bolzen 28 ist in einem Lager 29 geführt, das mit Hilfe von Schrauben 30 an den Schienen 32 und 33 des Trägers 31 befestigt ist. Durch eine Verstellung des Bolzens 28 und somit des Stellgliedes 27 können die Schalen 22 und 23 seitlich ausgeschwenkt und dadurch der Transportbehälter 21 geöffnet oder geschlossen werden.

Zur Betätigung der Bolzen 28 dient in der Ladestation 2 ein Stößel 4, der über ein Gestänge 5 in Abhängigkeit von der Zuführung der in die Transportbehälter 21 einzubringenden Waren gesteuert wird. Auf einen zu dem gleichen Zweck in der Entladestation 3 vorgesehen Stößel 6 wirkt dagegen eine Servoeinrichtung 7 ein, die in Abhängigkeit von dem Takt der der Einrichtung 1 zugeordneten Verpackungsmaschine ansteuerbar ist.

Die in der Ladestation 2 bestückten Transportbehälter 21 werden, sobald der dortige verstellbare Anschlag 51 gelöst wird, an das Transportrad 12 angekoppelt und zu der Entladestation 3 befördert. Das Ankoppeln erfolgt dabei in der Weise, daß durch die Kraft der Feder 42 der Klemmkörper 35 gegen das Transportrad 12 gepreßt und somit mit diesem kraftschlüssig verbunden wird. Befindet sich jedoch vor der Entladestation 3 bereits ein Transportbehälter, so wird durch diesen, da der Schenkel 38 des Winkelhebels 39 gegen den vorstehenden Nocken 41 gedrückt wird, die Triebverbindung gelöst und der Transportbehälter wird nicht weiterbefördert. Auf diese Weise können Transportbehälter aufgestaut werden, so daß ein Speicher zwischen den durch die Einrichtung 1 miteinander verketteten Maschinen geschaffen ist. Sobald jedoch ein Transportbehälter in der Entladestation 3 entleert ist und dieser durch Lösen des dortigen Anschlages 51 wiederum der Ladestation 2 zugeführt wird, werden die in Warteposition vor der Entladestation 3 befindlichen Transportbehälter nachgeführt. Da die Einrichtung 1 mit der Ladestation 2 und/oder der Entladestation 3 des weiteren zugeordneten Kontrollelementen 19, die an eine Steuereinheit angeschlossen sind, ausgestattet ist, ist eine entsprechende Überwachung leicht zu bewerkstelligen.

## Patentansprüche

1. Einrichtung zur gesteuerten Überführung von Transportbehältern von einer Beladestation zu einer Entladestation, insbesondere zum verpackungsgerechten Überführen von in einer Wurstfüllmaschine portionierten und abgedrehten Frischwürsten zu einer Verpackungsmaschine,

   **gekennzeichnet**

   durch ein vorzugsweise horizontal angeordnetes kontinuierlich umlaufendes Transportmittel (11) in Form eines Transportrades (12), eines Transportbandes oder dgl., an dem die Transportbehälter (21) mit Hilfe eines Trägers (31) aufgehängt sind, der mit dem Transportmittel (11) wahlweise koppel- und entkoppelbar ist.

2. Einrichtung nach Anspruch 1,

   **dadurch gekennzeichnet,**

   daß der Träger (31) der Transportbehälter (11) jeweils aus zwei mit Abstand zueinander und vertikal übereinander angeordneten Schienen (32, 33) besteht, zwischen die das Transportmittel (11) eingreift.

3. Einrichtung nach Anspruch 2,

   **dadurch gekennzeichnet,**

   daß in der oberen Schiene (32) des Trägers (31) in Förderrichtung (F) des Transportmittels (11) an deren vorderen Ende ein Klemmkörper (35) verschwenkbar gelagert ist, mittels dem der Träger (31) kraftschlüssig mit dem Transportmittel (11) wahlweise verbindbar ist.

4. Einrichtung nach Anspruch 3,

   **dadurch gekennzeichnet,**

   daß der Klemmkörper (35) durch einen mittels eines Bolzens (36) in einer Ausnehmung (34) der oberen Schiene (32) verschwenkbar gelagerten Winkelhebel (37) gebildet ist, der an dem dem Transportmittel (11) zugekehrten Schenkel (38) eine vorzugsweise ballig ausgebildete und gegenüber der Schwenkachse (Bolzen 36) zurückgesetzten Klemmfläche (39) aufweist.

5. Einrichtung nach Anspruch 3 oder 4,

**dadurch gekennzeichnet,**

daß dem Klemmkörper (35) eine in Förderrichtung (F) des Transportmittels (11) wirkende Druckfeder (42) zugeordnet ist.

6. Einrichtung nach einem oder mehreren der Ansprüche 3 bis 5,

**dadurch gekennzeichnet,**

daß die obere Schiene (32) des Trägers (31) an dem dem Klemmkörper (35) gegenüberliegenden hinteren Ende mit einem vorzugsweise in Fluchtrichtung der auf den Klemmkörper (35) einwirkenden Druckfeder (42) angeordneten vorstehenden Nocken (43) z. B. in Form eines Stiftes (44) versehen ist, mittels dem der Klemmkörper (35) des benachbarten Transportbehälters beim Aufstauen zweier Transportbehälter durch Verschwenken von dem Transportmittel (11) lösbar ist.

7. Einrichtung nach einem oder mehreren der Ansprüche 3 bis 6,

**dadurch gekennzeichnet,**

daß der Klemmkörper (35) in dem mit der Klemmfläche (40) versehenen Bereich in einer in das Transportmittel (11) eingearbeitete Nut (16) seitlich geführt ist.

8. Einrichtung nach einem oder mehreren der Ansprüche 3 bis 7,

**dadurch gekennzeichnet,**

daß die dem Klemmkörper (35) zugeordnete Anlagefläche (17) des Transportmittels (11) mit einem einen hohen Reibungskoeffizienten aufweisenden Belag (18) versehen ist.

9. Einrichtung nach einem oder mehreren der Ansprüche 1 bis 8,

**dadurch gekennzeichnet,**

daß die Belade- und/oder Entladestation (2, 3) einen zustellbaren Anschlag (51), beispielsweise in Form eines mit einer vertikal gerichteten Anschlagfläche (54) versehenen und vorzugsweise vertikal verschiebbaren Bolzens (52) aufweist, durch den der Klemmkörper (35) des Trägers (31) von dem Transportmittel (11) lösbar ist.

10. Einrichtung nach Anspruch 9,

**dadurch gekennzeichnet,**

daß der Anschlag (51) zum Lösen der Verbindung zwischen dem Klemmkörper (35) und dem Transportmittel (11) eine mit dem freien Schenkel (39) des Klemmkörpers (35) zusammenwirkende Auflaufschräge (55) aufweist.

11. Einrichtung nach Anspruch 9 oder 10,

**dadurch gekennzeichnet,**

daß die obere Schiene (32) des Trägers (31) einen mit der Anschlagfläche (54) des zustellbaren Anschlages (51) zusammenwirkenden Ansatz (45) aufweist.

12. Einrichtung nach einem oder mehreren der Ansprüche 1 bis 11,

**dadurch gekennzeichnet,**

daß die Öffnungs- und Schließbewegungen des vorzugsweise aus zwei gegeneinander verschwenkbar angeordneten Schalen (22, 23) bestehenden Transportbehälters (21) in der Ladestation (2) in Abhängigkeit von der Zuführung der von diesen aufzunehmenden Stückgütern, beispielsweise über ein Gestänge (5) oder eine ansteuerbare Servoeinrichtung, und in der Entladestation (3) in Abhängigkeit von dem Arbeitstakt der Verpackungsmaschine, beispielsweise durch eine Servoeinrichtung (7), steuerbar sind.

13. Einrichtung nach einem oder mehreren der Ansprüche 1 bis 12,

**dadurch gekennzeichnet,**

daß die Lade- und/oder Entladestation (2, 3) der Einrichtung (1) mit nach- und/oder vorgeschalteten an ein Steuergerät angeschlossenen Kontrollelementen (19) versehen sind.

FIG. 1

EP 0 446 659 A2

# FIG. 2

# FIG. 3

FIG. 4

EP 0 446 659 A2